# EUROPEAN PATENT APPLICATION

(11) **EP 4 296 927 A1**
(43) Date of publication of application: **27.12.2023**
(21) Application number: 22020294.9
(22) Date of filing: 22.06.2022
(51) Int. Cl.: G06Q 20/10, G06Q 30/04, G06Q 20/08

(54) **METHOD OF PAYMENT SETTLEMENT**

(71) Applicant: Szybkie Skladki Sp. z.o.o., 16-400 Suwalki (PL)
(72) Inventor: Czekaj, Lukasz, 80-437 Gdansk (PL); Kitlowska, Marta, 01-934 Warszawa (PL); Kitlowski, Robert, 01-934 Warszawa (PL)
(74) Representative: Matyka, Malgorzata

(57) **Abstract**

The present invention relates to a method of settling payments to the club's account, where the operator loads into the system a list of all transfers made to the club's accounts, then the system automatically links the transfers to individual players based on the data contained in the transfer and the players' records and creates a list.

## Description

The present invention relates to a method for optimizing the use of Internet and wireless communication channels in the payment recovery process.

It is known from the description of CN 107316188 A payment settlement method and a system for bus riding. The system comprises a scan sticker, a bus driver application, a passenger application and a cloud computing service. The ride can be completed without any card reading device, but only by scanning a "scan sticker" stuck in/on the bus via an application on the passenger's mobile phone using mobile internet technology, two-dimensional codes, NFC (near-field wireless communication technology), GPS positioning and big data analytics. The scanning sticker consists of a two-dimensional code and an NFC chip. The disembarkation function is completed through an app on the passenger's mobile phone, so that the entire ride and automatic payment process can be completed. This makes the bus ride processes very efficient, intelligent and passenger friendly.

From another description of US2001018679 A, we know a communication system for settlements made with an electronic card includes a communication network, the electronic card terminal system connected to the communication network for reading the card to send an electronic card settlement request. The bank account management system is connected to the communication network for managing multiple accounts, including an in-store account for the card user and an agent account, and the agent card settlement system is connected to the communication network for transferring a monetary amount from the agent account to the in-store account for the card user in response to the electronic card settlement request, thereby performing electronic card settlement.

From another description of WO2011093630, a method of handling settlement is known and a system in which a settlement agent and a receiver reciprocate a transaction through different financial institutions.

The subject of the present invention is a system that works within a sports club to automate payment reconciliation and improve the way payment reminders are sent by optimizing the use of online and wireless communication channels in the payment recovery process.

The club conducts various types of activities for players and has a record of players. Players pay periodic membership fees and, depending on how the club operates, fees for attending individual classes, camps, going to competitions etc. Collecting the due amounts manually and reminding the players/persons to pay the fee is not a very effective solution. Therefore, to solve this problem a process of settlement of dues has been created.

Charges are automatically generated based on player records and class assignments.

The player should pay the accrued fee by making a bank transfer for a specified amount within a specified time.

The operator, on the club side, assigns the transfers to specific charges. In this way, the club has information about the player's arrears/overpayments with the accuracy of the accrual.

One transfer can settle the accruals of multiple players (e.g. a transfer for a sibling) or multiple accruals for one player (e.g. a membership fee and a training fee). One charge may be settled with several transfers.

The present invention is a method of settling payments to the club's account, where the operator loads into the system a list of all transfers made to the club's accounts, then the system automatically links the transfers to individual players based on the data contained in the transfer and the players' records and creates a list.

The method where the operator automatically downloads a list of all transfers.

The method where the system receives information about the number of people who pay the amount due.

The method where, within a single player, the system settles all transfers: it assigns transfers to a player's accruals and settles the amounts.

The method where within a single transfer, the system accounts for all players.

The method where the list of transfers is displayed to the operator.

The method where reminders are generated based on the list of unsettled accruals, which are sent to the player.

The method where the system is a database and a WEB or MOBILE application.

The method where a WEB or MOBILE application communicates with a database providing a graphical interface to the operator.

Terms used above and in the patent description and claims, have the following meanings:
**Operator** - an employee of the club, the person responsible for clearing transfers and handling accruals .
**Dues** - the required amount/fee/contribution to be paid by the athlete. **Records** - A list, inventory maintained for each athlete in terms of dues and/or payments and/or classes and/or messages sent.
**System** - means a set of interrelated computer programs that streamline the accounts receivable settlement process.
**Player** - a person using the services of a sports club/client.

### Figure Description:

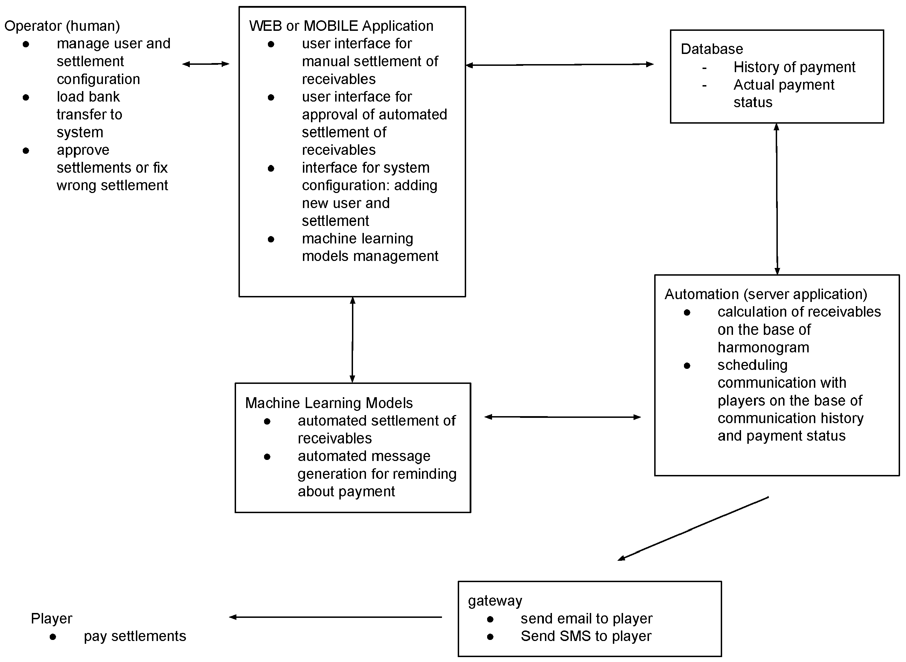

Fig.1 - shows the block diagram of the system that works within the sports club and is used to automate the settlement of payments and improve the way payment reminders are sent.

The invention is illustrated by the following non-limiting examples:

### Example

1. The system periodically (at the end of the month) generates a list of accruals for each player.
2. The operator loads (several times a month) into the system a list of transfers made to the club's accounts.
3. The system automatically links transfers to the player based on the data contained in the transfer and the player's record:
   1. The system defines a set of characteristics describing the transfer-athlete pair: e.g., the sender's name matches, the transfer sender's name matches the guardian's name, the surname in the title matches, the first name in the title matches, the player ID appears in the title, the transfer amount matches the player's commitment;
   2. Based on the determined features using machine learning methods (e.g. xgboost algorithm, SVM, logistic regression) or rule-based methods, the "weight" of the link between the overflow and the player is determined;
   3. Pre-filtering of overflow-competitor pairs to reduce the complexity of the problem;
4. Within a competitor, the system performs the settlement of transfers: it assigns transfers to the accruals of a given competitor and settles the amounts.
   1. Additional features linking the transfer to the charge are determined: e.g. the amount of the transfer matches the amount of the charge, in the title of the transfer there are keywords related to the charge;
   2. Based on a machine learning model or rule-based methods, the "weight" of the link between the transfer and the charge is determined;
   3. on the basis of the determined weights a matrix of weights is built; problem limits are defined: breaking a transfer into accruals should not exceed the transfer amount; assigning transfers to accruals should not exceed the value of accruals;
   4. optimization based on greedy or linear programming methods is performed in order to obtain the settlement of the transfer with accruals;
5. The result of steps 3 and 4 is a list combining transfers for accruals and the amount to be assigned from the transfer to the accrual, i.e: [(player_1, transfer_1, accrual_1, 100), (player_1, transfer_2, accrual_2, 50), (player_1, transfer_2, accrual_3, 50), ...].
   This list is displayed to the operator as a proposal to settle transfers. The operator accepts or rejects or modifies the proposals. The result of the invention is to reduce the time that the operator spends on the settlement of charges (until now, for each transfer, he had to find the player himself and then calculate the charges).
6. The system, based on the list of unsettled accruals generates reminders that are sent to the player. Reminders are sent through various channels: SMS, e-mail, at different times and with varied content. Sending reminders is optimized to minimize the arrears/delays in payments. The optimization is performed using sequential decision process optimization methods: e.g., contextual multi-armed bandit methods and is based on the player's behavioral model - it uses feedback in the form of information about timely payment of the charge;
7. Based on the reaction of the player (whether the player has paid the accrual on time, the history of transfers / payment of accruals), the behavioral profile of the player is created and the optimal way of communication is selected. The invention allows for more effective communication with the player in order to recover debts: reducing the number of messages and increasing the number of recovered debts / reducing the arrears / reducing the time to pay off the accrual.

One transfer can settle the accrual of many players (e.g. transfer for siblings) or many accruals for one player (membership fee and training fee). One charge may be settled with several transfers.

The payment/billing system supports multiple riders, can be used by multiple operators, and consists of a website server connected to a communication network.

The system consists of the following parts:
1. Database (storing information about charges, transfers, players, activities the player has attended, communication with the player).
2. WEB or MOBILE application, communicates with a database, providing a graphical interface for the operator to use:
   - loading transfers based on bank account statements,
   - reviewing the counts,
   - manual linking of calculations with transfers,
   - application for calculating accruals based on the schedule,
   - application to determine arrears (periodic review of the database to determine unpaid accruals),
   - application performing automatic linking of calculations with transfers on the basis of a machine learning model,
   - applications for communication with players (periodic sending of SMS and e-mails based on accruals), determining the channel and method of communication based on a machine learning model.

## Claims

1. A method of settling payments to the club's account is **characterized in that** operator loads into the system a list of all transfers made to the club's accounts, then the system automatically connects the transfers with particular players on the basis of the data contained in the transfer and the records of players and creates a list.

2. The method according to claim 1, **characterized in that** the operator automatically retrieves a list of all transfers.

3. The method according to claim 1, **characterized in that** the system receives information about the number of persons who pay the amount due.

4. The method according to claim 1, **characterized in that within** a single player, the system accounts for all transfers: it assigns the transfers to the counts of the respective player and accounts for the amounts.

5. The method according to claim 1, **characterized in that** within one transfer, the system accounts for all players.

6. The method according to claim 1, **characterized in that** a list of transfers is displayed to an operator.

7. The method according to claim 6, **characterized in that** on the basis of a list of unsettled accruals, reminders are generated which are sent to the player.

8. Method according to claim 1, **characterized in that** the system is a database and a WEB or MOBILE application.

9. Method according to claim. 8, **characterized in that** the WEB or MOBILE application communicates with the database providing a graphical user interface.
